# EUROPEAN PATENT APPLICATION

(11) **EP 2 555 115 A1**
(43) Date of publication of application: **06.02.2013**
(21) Application number: 11762901.4
(22) Date of filing: 30.03.2011
(51) Int. Cl.: G06F 11/14

(54) **DEVICE AND METHOD FOR RESTORING INFORMATION IN A MAIN STORAGE DEVICE**

(30) Priority: 30.03.2010 JP 2010078112
(71) Applicant: L E Tech Co., Ltd, Tokyo 130-0013 (JP)
(72) Inventor: TATSUNO Isao, Tokyo 1300013 (JP)
(74) Representative: Small, Gary James
(86) International application number: PCT/JP2011/058121
(87) International publication number: WO 2011/122677

(57) **Abstract**

Disclosed is an device for restoring information in a main storage unit, wherein, if a malfunction occurs in a microcomputer, the microcomputer is made able to recover from the malfunction. The device comprises: a central processing unit comprising one or more registers; a rewritable first storage unit; a rewritable second storage unit; and storage unit management means. The storage unit management means stores restoration information comprising of storage unit information stored in the first storage unit and register information into the second storage unit, and then the storage unit management means restores the information in the first storage unit and the information in the corresponding one or more registers on the basis of the restoration information stored in the second storage unit.

## Description

### TECHNICAL FIELD

The present invention relates to restoration of information in a main storage unit. More particularly, the present invention relates to a technique of restoring information in a main storage unit on the basis of information stored in storage units other than the main storage unit.

### BACKGROUND ART

A microcomputer is always affected by factors such as electric external noise, static electricity, vibration, and heat. Further, due to the factors such as the external noise, a microcomputer malfunction caused by so-called "CPU runaway" is likely to occur. Then, in the event that defective information is stored in the main storage unit by the microcomputer malfunction, or information in the main storage unit is altered and damaged by the external noise, then the information stored in the main storage unit is likely to be defective information which cannot be normally used in the subsequent processing.

In the conventional art, it is possible to perform detection or avoidance of the microcomputer malfunction using techniques such as those for detecting use of undefined instruction codes on the microcomputer, for detecting access to undefined memory address spaces, for monitoring a process with a watchdog timer, and for periodically resetting the central processing unit. However, there is not any technique for restoring the defective information stored in the main storage unit to information in normal condition after a malfunction occurs in the microcomputer. Accordingly, in the conventional art, the means for modifying the defective information stored in the main storage unit to information in normal condition is achieved by resetting whole units in the microcomputer, such as the central processing unit, main storage unit, and I/O interface, and re-executing the running program etc. from the beginning. Thus, in the event of use of such a conventional art, important information (e.g., information on human life or money) stored in the main storage unit etc. is likely to be lost. Further, in the event of use of the means, the whole unit will be reset, so that it takes substantially the same degree of time from initiation to termination of the means as the initialization at the time of powering on, requiring significantly long time period.

Additionally, in the conventional art, a system exists in which a microcomputer comprising a plurality of central processing units monitoring central processing unit malfunctions reciprocally. Further, a system exists in which each central processing unit comprises its dedicated main storage unit. However, such a system will be very costly because it must prepare a plurality of identical units. Further, the monitoring of malfunction in the system is achieved by comparing information on registers of each central processing unit reciprocally, and comparing information stored in each main storage unit reciprocally. Therefore, this system requires considerable processing time for performing the processing for the monitoring a malfunction, which is not an essential processing task for the microcomputer.

### LIST OF PRIOR ART DOCUMENTS

### [PATENT DOCUMENTS]

Patent Document 1: Japanese Patent Application No. 2009-238742
Patent Document 2: JP 06-071024A
Patent Document 3: JP 09-319602A

### SUMMARY OF THE INVENTION

### [PROBLEM TO BE SOLVED BY THE INVENTION]

The embodiment of the present invention preliminarily evacuates information that has been stored in the main storage unit before a microcomputer malfunction occurs, and restores information on the basis of the evacuated information after the malfunction occurs in the microcomputer. The processing of the evacuation and restoration can be performed in a very short time because the evacuation and restoration are achieved by using a rewritable storage unit. Thus, in a field in which troubles or damages are likely to occur by computer malfunction, such as mechatronics, robots, game consoles including amusement machines, engine controls, vehicle brake controls, elevator controls, etc., the occurrence of troubles or damages may be significantly reduced by employing the present invention. In particular, large welding current is used in an industrial welding robots, etc., large current and high voltage are used for electrical power sections in motor vehicles, and static electricity easily occurs in an environment in which amusement machines are arranged. Then, these large currents, high voltages and static electricity generate electric noise which may cause the microcomputer malfunction. Therefore, it is important in a microcomputer to take measures against the effects of electric noise including static electricity.

In addition, when processing of a certain program is in execution at the time of evacuating information in registers, the embodiment of the present invention allows for restart of the processing of the program from the time point when the information in the registers is evacuated by restoring the information in the registers. This makes it possible to restore not only information in the main storage units but also the operation of the microcomputer itself retroactive to the time point when the information is evacuated.

### [MEANS FOR SOLVING THE PROBLEM]

A device capable of restoring information in a main storage unit according to the embodiment of the present invention may comprise: a central processing unit comprising one or more registers; a rewritable first storage unit; a rewritable second storage unit; and storage unit management means for acquiring restoration information comprising of storage unit information stored in the first storage unit and register information stored in the one or more registers and storing the restoration information in the second storage unit.

The device capable of restoring information in a main storage unit according to the embodiment of the present invention may perform acquisition of the restoration information and storage of the restoration information into the second storage unit repetitively.

The device capable of restoring information in a main storage unit according to the embodiment of the present invention may perform the repetition on a periodic basis.

The device capable of restoring information in a main storage unit according to the embodiment of the present invention may periodically perform interrupt processing for the repetition, acquire the restoration information in each interrupt processing, and store the restoration information into the second storage unit with the storage unit management means.

The device capable of restoring information in a main storage unit according to the embodiment of the present invention may perform the repetition at random intervals.

The device capable of restoring information in a main storage unit according to the embodiment of the present invention may perform the repetition when a predetermined condition is met.

The device capable of restoring information in a main storage unit according to the embodiment of the present invention may further comprise cache memory located between the first storage unit and the second storage unit, wherein when information stored in the first storage unit is modified, the cache memory stores the information modified by the storage unit management means.

The device capable of restoring information in a main storage unit according to the embodiment of the present invention may restore information in the first storage unit using the storage unit information in the restoration information stored in the second storage unit, and restore information in the corresponding one or more registers using the register information in the restoration information with the storage unit management means.

The device capable of restoring information in a main storage unit according to the embodiment of the present invention may perform restoration of information in the first storage unit and restoration of information in the one or more registers with the storage unit management means when the device malfunctions.

The device capable of restoring information in a main storage unit according to the embodiment of the present invention may further comprise a storage unit controller, and may perform the restoration of the storage unit information by the storage unit controller switching the main storage unit from the first storage unit to the second storage unit.

The device capable of restoring information in a main storage unit according to the embodiment of the present invention may be operable, when acquiring the restoration information, to validate and append restoration possibility information to the restoration information with the storage unit management means, wherein the restoration possibility information is information indicative of validity if the restoration information is available at the time of restoration and indicative of invalidity if the restoration information is not available at the time of restoration, and when restoration of information in the first storage unit and restoration of information in the one or more registers are performed, to restore the first storage unit using the storage unit information in the restoration information stored in the second storage unit and restore the corresponding one or more registers using the register information in the restoration information with the storage unit management means only in the case where the restoration possibility information indicates valid, wherein the device may further be operable to change the restoration possibility information in the restoration information stored in the second storage unit to indicate invalid with the storage unit management means, and to prevent the restoration possibility information from being changed unless restoration information is newly acquired.

The device capable of restoring information in a main storage unit according to the embodiment of the present invention may further comprise a rewritable third storage unit, wherein the device may be operable to acquire new restoration information, to store the restoration information stored in the second storage unit into the third storage unit, and wherein the device may further be operable to store the new restoration information into the second storage unit, and to perform restoration of information in the first storage unit and restoration of information in the one or more registers based on the restoration information or the new restoration information with the storage unit management means.

The device capable of restoring information in a main storage unit according to the embodiment of the present invention may cause the storage unit management means to perform restoration of information in the first storage unit and restoration of information in the one or more registers based on the restoration information or the new restoration information in which the restoration possibility information included therein indicates valid, to change the restoration possibility information in the restoration information or the new restoration information used in the restoration to indicate invalid, and to prevent the restoration possibility information from being changed unless restoration information is newly acquired.

The device capable of restoring information in a main storage unit for restoring information in a main storage unit according to the embodiment of the present invention may comprise a rewritable first storage unit; a rewritable second storage unit; and storage unit management means for storing storage unit information stored in the first storage unit into the second storage unit.

The device capable of restoring information in a main storage unit according to the embodiment of the present invention may perform storage of the storage unit information into the second storage unit repetitively.

The device capable of restoring information in a main storage unit according to the embodiment of the present invention may perform the repetition on a periodic basis.

The device capable of restoring information in a main storage unit according to the embodiment of the present invention may perform the repetition at random intervals.

The device capable of restoring information in a main storage unit according to the embodiment of the present invention may perform the repetition when a predetermined condition is met.

The device capable of restoring information in a main storage unit according to the embodiment of the present invention may restore information in the first storage unit with the storage unit management means using the storage unit information stored in the second storage unit.

The device capable of restoring information in a main storage unit according to the embodiment of the present invention may further comprise a central processing unit comprising one or more registers, and may restore information in the corresponding one or more registers with the storage unit management means using the register information which is information in the one or more registers at a predetermined time point included in the storage unit information.

### BRIEF DESCRIPTION OF THE DRAWINGS

FIG. 1 is a block diagram illustrating an overview of a device 100 according to the embodiment of the present invention.
FIG. 2 is a block diagram illustrating the relationship between a CPU 115 and a first, second and third RAMs 120, 125 and 130.
FIG. 3 is a flow diagram illustrating the operation of a storage unit management section according to the first embodiment of the present invention.
FIG. 4 is a flow diagram illustrating the operation of a storage unit management section according to the second embodiment of the present invention.
FIG. 5 illustrates the process flow of an embodiment in which acquisition and storage of restoration information is performed on a periodic basis.
FIG. 6 is a time chart illustrating the relationship between each process in steps 505 to 540 shown in the process flow of FIG. 5 and information stored in a storage unit.
FIG. 7 is a time chart illustrating the relationship between each process in steps 550 to 560 shown in the process flow of FIG. 5 and information stored in a storage unit.
FIG. 8 is a process flow diagram illustrating the operation of an embodiment in which acquisition and storage of restoration information is performed on a periodic basis in a device 100 comprising three RAMs.
FIG. 9 is a time chart illustrating the relationship between each process in steps 805 to 845 shown in the process flow of FIG. 8 and information stored in a storage unit.
FIG. 10 is a time chart illustrating the use case of the embodiment of the device 100 shown in the process flow of FIG. 8.
FIG. 11 is a block diagram illustrating the relationship between a CPU and RAMs for implementing the present embodiment.
FIG. 12 is a process flow diagram illustrating the operation of an embodiment according to a storage unit controller 1105 of FIG. 11.
FIG. 13 is a block diagram illustrating an embodiment in which a cache memory is used between the first RAM as a main memory and the second RAM 125 other than the main memory.

### DESCRIPTION OF EMBODIMENTS

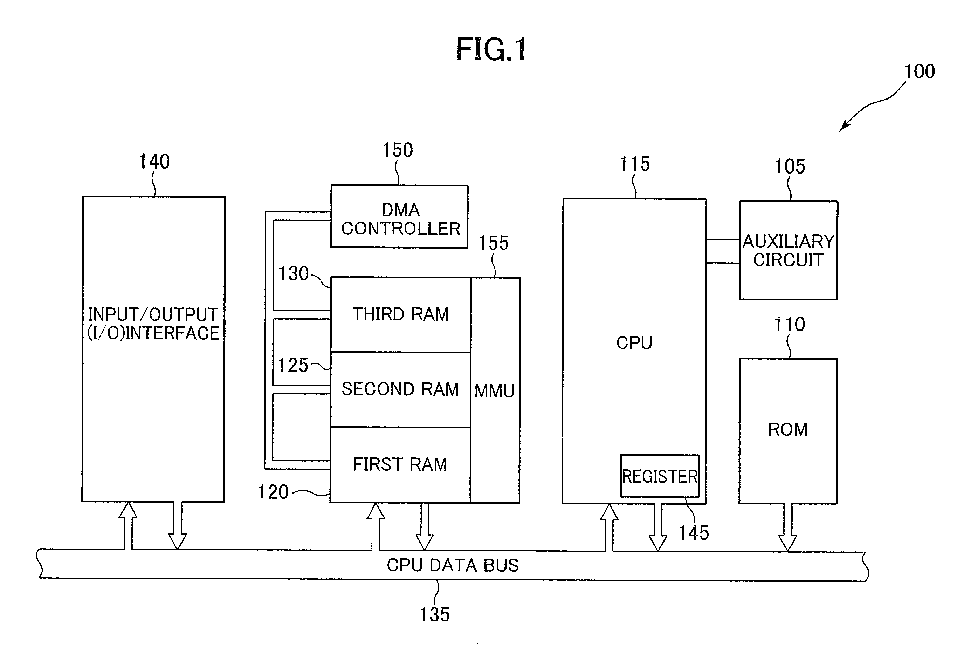

FIG. 1 is a block diagram illustrating an overview of a device 100 according to the embodiment of the present invention. The device 100 comprises an auxiliary circuit 105, a ROM (Read Only Memory) 110, a CPU (Central Processing Unit) 115, a first RAM (Random Access Memory) 120, a second RAM 125, a third RAM 130, a CPU bus 135, an input/output (I/O) interface 140, and a DMA controller (Direct Memory Access controller) 150.

The CPU 115 has the auxiliary circuit 105 and incorporates one or more registers 145. As the registers 145, accumulators, address registers, index registers, stack pointers, page registers, segment registers, program counters, status registers, control registers, and other dedicated or general-purpose registers may be used. The auxiliary circuit 105 includes circuits, such as those for generation of clock pulse for use by the CPU 115, for reset of the CPU 115 by controlling power supply to the CPU 115, and for a timer for periodically performed interrupt processing, etc.

The ROM 110 stores a program, etc. The first, second and third RAM 120, 125 and 130 may incorporate an MMU (Memory Management Unit) 155. The first rewritable storage unit 120 may act as a main memory (referred also to as a main storage unit or a main RAM), and may also store information stored in the registers 145 of the CPU 115. The I/O interface 140 performs input/output to/from other external devices.

FIG. 1 is presented for purposes of illustration, and the device 100 may be a computer comprising at least the CPU 115, the main memory 125, and a bus for connection therebetween. The device 100 includes a microcomputer or the like. Further, the microcomputer includes a one-chip microcomputer.

The plurality of RAMs may be implemented in one storage unit. In addition, the plurality of RAMs may physically be implemented as a plurality of storage units. Further, each RAM may respectively have its own power supply because the power supply is more susceptible to external noise than other elements.

The information needed for restoring information in the main memory 120 is information which dynamically varies during the performance of a certain processing. In the device 100, the dynamically varying information is register information stored in one or more registers 145 and storage unit information stored in the main memory 120. In particular, the register information varies each time a certain operation is performed because it includes an instruction for the CPU 115 to execute next, an address indicative of where the instruction to be performed next is, and the address of information on the main storage.

In a microcomputer, the register information is sent to the main memory and stored therein. Typically, the register information and the storage unit information are not stored in an external auxiliary storage unit (e.g., hard-disk, silicone-disk, solid state drive) etc. Therefore, the information stored in the main memory 120 is restored to the content at a predetermined time point by evacuating the information at the predetermined time point stored in the main memory 120, and again storing the evacuated information into the main memory 120 after the predetermined time point has passed.

Further, the processing that is being performed can also be restored by storing the register information of the evacuated information into the corresponding registers 145. For example, even if the information stored in the main memory 120 is altered and made impossible to restore due to the effect of external noise, etc. during execution of an application program, the information in the main memory 120 and the registers 145 can be restored based on the information in the main memory 120 and the registers 145 at a certain time point. Thus, the application is resumed at a middle part thereof. Then, the overhead of the processes is only short amount of time for acquiring information stored in other RAM 125 or 130 and storing the information into the first RAM 120 to restore the information in the first RAM 120.

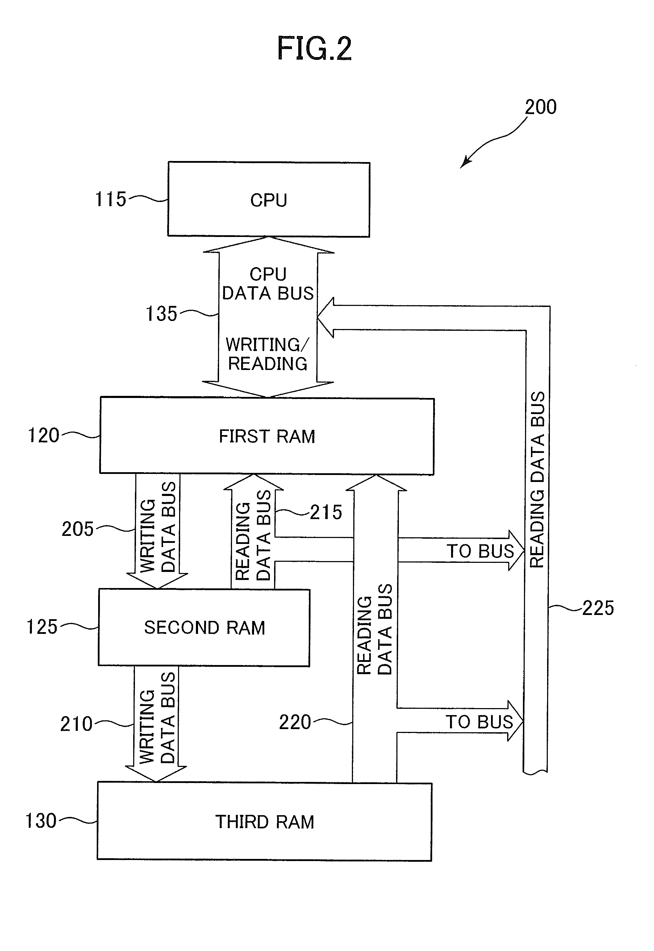

FIG. 2 illustrates in a block diagram the relationship between a CPU 115 and first, second and third RAMs 120, 125 and 130.

The CPU 115 is connected to the first RAM 120 as a main memory via a CPU bus 135, to the second RAM 125 via the CPU bus 135, a read-only bus 225 and a reading data bus 215, and to the third RAM 130 via the CPU bus 135, the read-only bus 225 and a reading data bus 220. Then, the CPU bus 135 is used for writing and reading. Thus, the CPU 115 is not allowed to write data in the second RAM 125 and the third RAM 130, but is allowed to write data in the first RAM 120.

The first RAM 120 is connected to the CPU 115 via the CPU bus 135, to the second RAM 125 via a writing data bus 205 and the reading data bus 215, as well as via the CPU bus 135, the read-only bus 225 and the reading data bus 215, and to the third RAM 130 via the reading data bus 220. Thus, the information for writing data stored in the first RAM 120 is not sent to the third RAM 130, but is sent to the second RAM 125.

The second RAM 125 is connected to the first RAM 120 via the writing data bus 205 and via the reading data bus 215, to the third RAM 130 via the writing data bus 210, and to the CPU 115 via the reading data bus 215, the read-only bus 225 and the CPU bus 135. Thus, the information for writing data stored in the second RAM 125 is not sent to the first RAM 120, but to the third RAM 130. Then, the information for reading data stored in the second RAM 125 is not sent to the third RAM 130, but to the first RAM 120 and CPU 115.

The third RAM 130 is connected to the second RAM 125 via the writing data bus 210, to the first RAM 120 via the reading data bus 220, and to the CPU 115 via the reading data bus 220, the read-only bus 225 and the CPU bus 135. Thus, the information for writing data stored in the third RAM 130 is not sent to any devices. Then, the information for reading data stored in the third RAM 130 is not sent to the second RAM 125, but to the first RAM 120 and CPU 115.

The management among these storage units may be achieved by a storage unit management section. The storage unit management section comprises the CPU 115, various types of data buses, a direct memory access (DMA) controller, a memory management unit (MMU) etc, or a combination of one or more thereof. In the embodiment of the present invention, the management of information stored in each RAM may be achieved by using the DMA controller or the memory management unit, etc. without using the CPU 115. In addition, the CPU 115 is connected to the second RAM 125 and the third RAM 130 via the read-only bus. Thus, the CPU 115 is not allowed to directly write information into these RAMs. This prevents the CPU 115 from rewriting the information stored in the second RAM 125 and the third RAM 130 even in the event of malfunction of the CPU 115, etc.(e.g., runaway of the CPU 115).

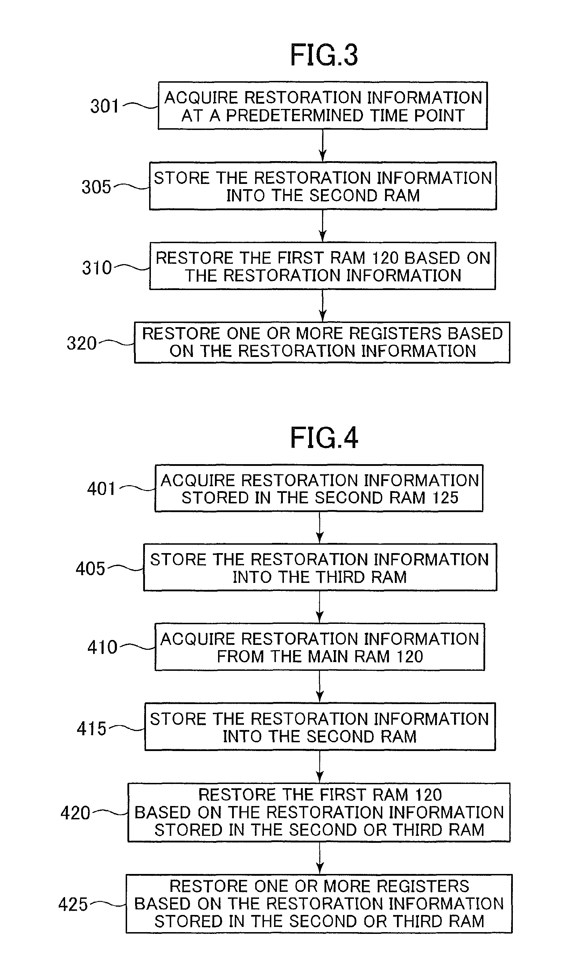

FIG. 3 is a flow diagram illustrating the operation of the storage unit management section according to the first embodiment of the present invention. In the first embodiment of the present invention, the storage unit management section acquires information (restoration information) in the first RAM 120 as the main memory stored at a predetermined time point (step 301). The storage unit management section stores the restoration information into the second RAM 125 (step 305). The storage unit management section can restore the information in the first RAM 120 based on the restoration information at the predetermined time point stored in the second RAM 125 after the predetermined time point has passed (step 310).

Further, the storage unit management section can restore the information in the registers 145 based on the restoration information at the predetermined time point stored in the second RAM 125 when restoring the information in the first RAM 120. The restoration information stored in the second RAM 125 includes register information because the information in the registers 145 is typically included in the main memory 120. It is noted, however, that the register information may not sometimes be stored in the main memory 120 depending on the way the CPU 115 and the main memory 120 are implemented. In that case, the storage unit management section also acquires the register information stored in the registers 145, and appends it to the restoration information when acquiring the restoration information from the first RAM 120 as the main memory, so that the register information is included in the restoration information. In the description below, the register information is assumed to be stored in the main memory 120 each time the register information is modified. The restoration information may be all the information in the first RAM 120 stored at a predetermined time point. The restoration information may also be some of the information in the first RAM 120 stored at a predetermined time point.

The restoration of the register information may be carried out by the storage unit management section directly storing information from the restoration information stored in the second RAM 125 into the registers 145. Alternatively, the register information may be restored by the CPU 115 acquiring the register information from the first RAM 120 and storing the acquired information into the registers 145 after the restoration of the first RAM 120.

At this moment, the RAMs 120, 125 and 130 store many different types of information such as storage unit and register information for restoration, and/or storage unit and register information for current processing. Therefore, by preliminarily defining that each piece of information is stored in a predetermined area in each of the RAMs, the storage unit management section can determine what sort of information the information in the predetermined area is. Further, that area may be the same in all of the RAMs.

FIG. 4 is a flow diagram illustrating the operation of the storage unit management section according to a second embodiment of the present invention. In this embodiment, the device 100 comprises the third RAM 130. At this moment, the second RAM 125 is assumed to already have stored first restoration information at a predetermined time point.

Initially, the storage unit management section may acquire the first restoration information stored in the second RAM 125 after the predetermined time point has passed (step 401), and store the acquired information into the third RAM 130 (step 405). Further, the storage unit management section acquires information (second restoration information) in the first RAM 120 stored at that time point (step 410), and performs an overwrite storage of the acquired information into the second RAM 125 (step 415).

Thus, in steps 420 and 425, the storage unit management section can restore information in the first RAM 120 and/or the registers 145 based on the second restoration information that is information stored one generation earlier in the second RAM 125. Further, the storage unit management section can also restore information in the first RAM 120 and/or the registers 145 based on the first restoration information that is information stored two generations earlier in the third RAM 130.

The process of acquiring the restoration information and storing it into RAMs other than the main memory may be repetitively performed over time by the storage unit management section. The repetition may be performed at constant periods, at random periods, upon satisfaction of a predetermined condition, or by combination of one or more thereof. As an example of a constant period, the repetition may also be performed at a quite short internal such as 2 ms. In addition, this constant period may be changed depending on the application program executed with the device 100. As an example of a random period, a random number may be acquired and used as the time interval. Further, an example of satisfaction of a predetermined condition includes a case where a predetermined program is performed (e.g., a case where a processing is performed such as a supervisor call (whereby the program to be controlled changes from an application program into an OS program)), a case where a predetermined error processing is performed by the device 100, a case where an interrupt processing occurs, and even a case where predetermined information is stored in the main memory 120, etc.

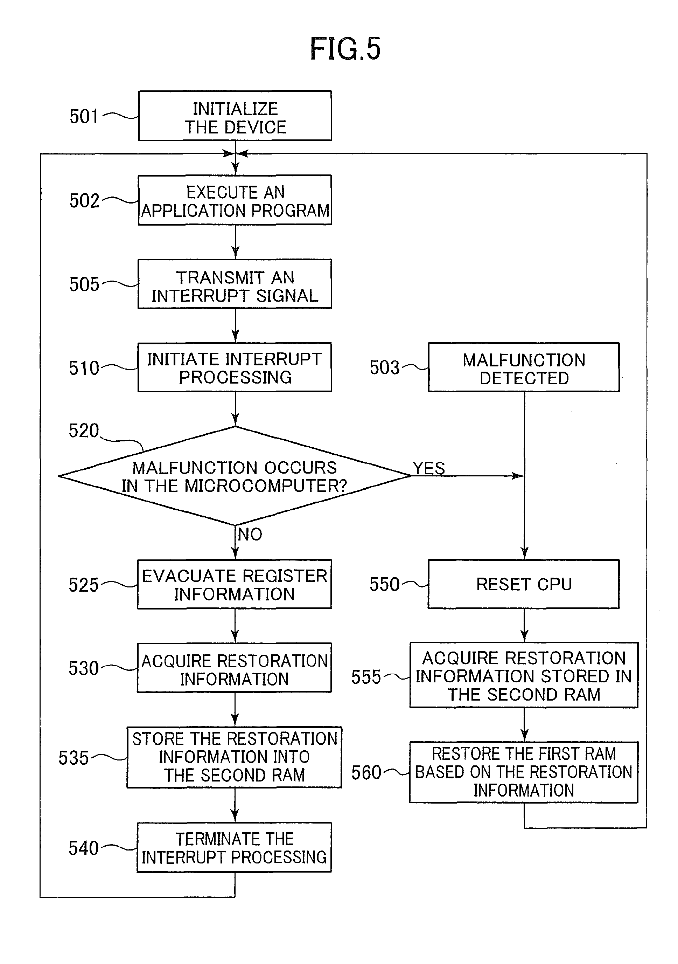

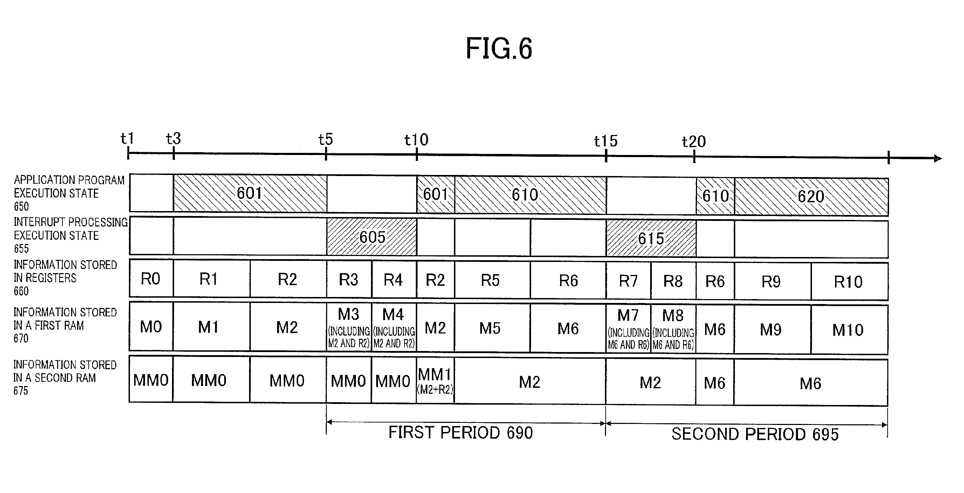

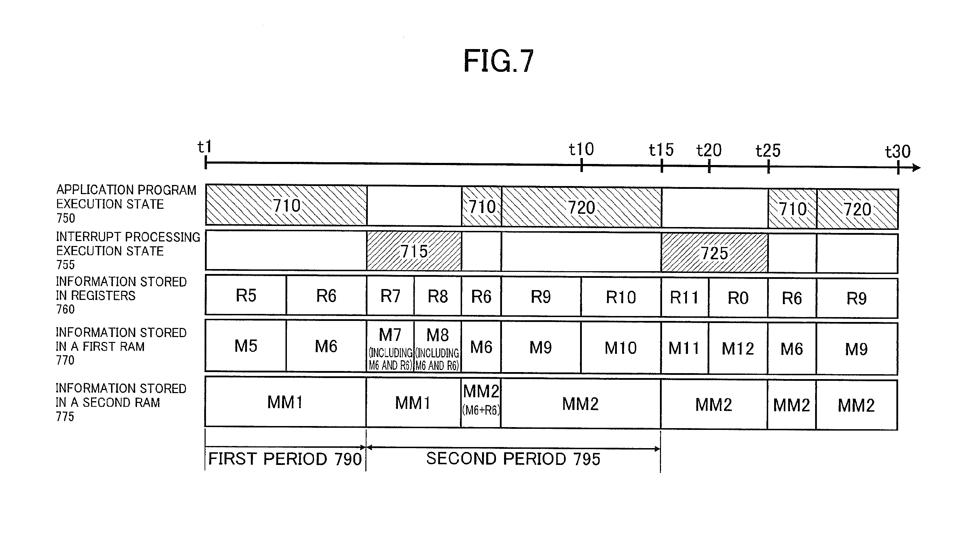

A third embodiment of the present invention will be described with reference to FIGS. 5, 6 and 7. FIG. 5 illustrates a process flow of an embodiment in which acquisition and storage of restoration information are periodically performed. In this embodiment, information in the registers 145 is stored in a RAM by performing explicit processing. FIG. 6 is a time chart illustrating a relationship between each process in steps 505 to 540 shown in the process flow of FIG. 5 and information stored in a storage unit, and FIG. 7 is a time chart illustrating a relationship between each process in steps 550 to 560 shown in the process flow of FIG. 5 and information stored in a storage unit.

In FIGS. 6 and 7, arrows in a horizontal axis represent passages of time, and hatched portions in rows of application program execution states 650 and 750 and interrupt processing execution states 655 and 755 represent states where each processing is being performed. Then, in rows of information stored in registers 660 and 760, information stored in a first RAM 670 and 770, and information stored in a second RAM 675 and 775, R0, R1 ..., M0, M1 ..., and MM0, MM1..., etc. represent information stored. In addition, in R0, R1 ..., M0, M1 ..., and MM0, MM1..., etc., like symbols represent like information stored. It is noted that while the register and storage unit information concurrently vary in FIGS. 6 and 7, the implementation may be made such that this information does not vary concurrently, as is apparent to those having ordinary skill in the art. FIGS. 6 and 7 are shown for illustrative purpose, and the temporal scale is not necessarily correct. Therefore, execution time of the interrupt processing may be of very small percentage relative to execution time of the application program.

First, the device 100 itself is powered on and initialization of the whole device 100 is performed (step 501). As shown at t1 of FIG. 6, R0, M0 and MM0 respectively indicate that the information in the registers 145, main memory 120 and second RAM 125 is the initialized information. It is noted that the information stored in the second RAM 125 by initialization may be synchronized with the information stored in the main memory 120 (in this case, the information in the second RAM becomes M0 instead of MM0, and the information M0 is used as restoration information). Then, after the completion of initialization, execution of the application program begins as indicated by a state 601 at t3 of FIG. 6 (step 502). As the application program progeresses, the register information varies from R0 to R1, and then from R1 to R2. Further, the storage unit information also varies from M0 to M1, and then from M1 to M2.

At t5 through t10 of FIG. 6, a series of interrupt processing steps 505 to 540 is performed. At t5 of FIG. 6, an auxiliary circuit 105 transmits an interrupt signal to a CPU 115 (step 505). The interrupt signal is generated at a constant interval (e.g., 690 and 695 in FIG. 6) according to a timer in the auxiliary circuit 105 and transmitted to the CPU 115. In this case, the interrupt signal may be an NMI signal (Non-Maskable Interrupt signal) which is a signal uncontrollable from software. Then, upon receiving the interrupt signal, the CPU 115 begins the interrupt processing (step 510). As shown in the states 601 and 605 at t5 of FIG. 6, the application program is halted and the interrupt processing begins.

Once the interrupt processing begins, first, a determination of if any malfunction has occurred in the device 100 is made (step 520). If a malfunction has not occurred, the process flow proceeds to step 525. Otherwise, the process flow proceeds to step 550. The condition for determining whether or not a malfunction has occurred will be described below.

If it is determined that no malfunctions have occurred in the device 100 (step 520), the CPU 115 evacuates the register information into the main memory 120, where the register information is information stored in the registers 145, which is necessary to execute the application program (step 525). To resume the application program after termination of the interrupt processing, as shown at the time point of t5 of FIG. 6, the main memory 120 stores storage unit information M3 including the evacuated register information R2. This operation is a normal interrupt processing operation. Here, the interrupt processing does not alter the information in the main memory 120 used in the application program. Therefore, the storage unit information M3 may include storage unit information M2 and register information R2 immediately before the initiation of the interrupt processing.

Then, at t10 of FIG. 6, the storage unit management section acquires information (restoration information) stored in the first RAM 120 as the main memory (step 530), and stores the restoration information into the second RAM 125 (step 535). At t10 of FIG. 6, the storage unit management section acquires the restoration information from information M4 stored in the first RAM 120. At this moment, the restoration information is the storage unit information M2 and register information R2 immediately before the initiation of the interrupt processing. Thus, before and after t10 of FIG. 6, the information stored in the second RAM 125 is altered from MM0 to MM1 (information comprising of R2 and M2). Further, in another embodiment, the redundancy of the device 100 is improved by storing a replication of the restoration information MM1 into another area of the second RAM 125.

Then, the CPU 115 terminates the interrupt processing (step 540). In particular, the register information that has been evacuated in step 525 (register information R2 included in storage unit information M4 at t10 of FIG. 6) is retrieved from the first RAM 120 and used to restore information in the corresponding registers. This operation is a normal operation for returning from the interrupt processing. After termination of the interrupt processing, the registers 145 may be returned to the register information before interrupt processing, and the application program is resumed as shown in states 601 and 610 at t10 to t15 of FIG. 6. It is noted that the application program is resumed only by restoring the register information in the registers 145 without changing the information stored in the main memory because immediately before the time t10 of FIG. 6, the first RAM 120 includes the storage unit information M2 immediately before initiating the interrupt processing. However, in terminating the interrupt processing, unnecessary information other than the storage unit information M2 may also be deleted from the first RAM 120 based on the instruction of the CPU 115.

Then, the process flow returns to step 502. Thereafter, a series of steps 502 to 540 is repeated in the same manner. Accordingly, the information stored in the second RAM 125 is overwritten with the information stored in the main memory and the information stored in the registers 145 each time the series of steps is performed. Thus, if the predetermined period, an interval of performing the interrupt processing, is 2 ms, the device 100 can consistently have information of up to about 2 ms before stored in the main memory 100.

On the other hand, assume that the malfunction occurs at t10 of FIG. 7. After this, at t15 of FIG. 7, it is determined that the malfunction has occurred in the device 100 (step 520), with the possibility that processing of the application program in the state 720 at t10 of FIG. 7 may not have been performed correctly. Thus, the register information R10 and R11, as well as the information in the main memory M10 and M11 potentially include defective information (meaning that the information may be not correct).

Thereafter, in order to restore the operation of the microcomputer, an auxiliary circuit 105 resets only the CPU 115 at t20 of FIG. 7 (step 550). As an example, the reset is performed by the auxiliary circuit 105 transmitting a reset signal to the CPU 115, so that the register information is initialized. In FIG. 7, the register information R0 immediately after t20 indicates that it is initialized.

In addition, the malfunction detecting section such as the CPU 115 detects the occurrence of malfunction in the device 100 independently of the execution process and the interrupt processing of the application program (step 503). If the malfunction detecting section detects the occurrence of malfunction in the device 100, the process flow proceeds to step 550. Thus, the malfunction is resolved in the device 100, such as executing undefined instructions or accessing to nonexistent memory space.

At t20 of FIG. 7, the storage unit management section acquires the restoration information stored in the second RAM 125 (step 555), and restores the information in the first RAM 120 and the corresponding registers 145 based on the acquired restoration information (step 560). Therefore, the information in the registers 145 and the main memory 120 may be restored using the register information R6 and the storage unit information M6 in the restoration information MM2 stored in the second RAM 125. Thus, at t25 of FIG. 7, the registers 145 are changed from R0 to R6 and the storage unit information in the main memory 120 is changed from M12 to M6. Then, the application program is resumed as shown in states 710 and 720 at t25 to t30 of FIG. 7.

As another embodiment, the embodiment of the present invention may prevent the reset of the CPU 115 (step 550) from being added to the process flow. In addition, the processing for initiating and terminating the interrupt processing as described in steps 510, 525 and 540 is an example, and may be implemented by other approaches. Further, the reset of the CPU 115 may be performed by the processing such as by means of a watchdog timer or optional error recovery processing performed after occurrence of predetermined errors.

As shown by 690 and 695 in FIG. 6, the transmission of the interrupt signal by the auxiliary circuit 105 in step 505 is repetitively performed at a predetermined period. Consequently, a series of steps 510 to 540 performed after reception of the interrupt signal must be completed within the predetermined period. This is because if the performance of the series of steps is not completed within the predetermined period, the series of steps performed within that predetermined period (e.g., the first period 690) and the series of steps performed within the next predetermined period (e.g., the second period 695) will be performed at the same time, so that consistency of the processing sequence cannot be maintained. This means that if the predetermined period is 2 ms, the series of steps is required to be completed in less than 2 ms.

In addition, in the event that the series of steps is not completed within the predetermined period of time, the device 100 is not correctly operating, and thus it is possible to determine that the device 100 is malfunctioning. Accordingly, in the process flow, a step about this determination may be added before termination of the interrupt processing. Further, in the process flow after the determination that the device 100 is malfunctioning is made, steps of resetting the CPU 115 and restoring information in the main memory 120 and the registers may be added.

It is noted that while the interval of performing the repetition of interrupt processing is defined as a predetermined period in this embodiment, it may be a random time interval as long as it is a time period within which the series of steps 510 to 540 is completed.

As another embodiment, in steps 510 to 540, a step of periodically resetting only the CPU 115 may be added. In addition, a step of randomly resetting only the CPU 115 may be added, as necessary. By these steps, the CPU 115 is reset after powering on of the device 100, and thus malfunctions caused by the CPU 115 can be reduced.

In addition, the step of resetting only the CPU 115 may also be added to the part of any process flow. However, the step of resetting only the CPU 115 is achieved by evacuating the register information before the reset, and restoring the evacuated register information into the corresponding registers 145 after the reset. This step is a process of only resetting the CPU 115 and restoring the register information, and thus the CPU 115 can be initialized in a very short time. As a preferred embodiment, the step may be added before or after the step of terminating the interrupt processing (540) or the step of acquiring the restoration information (530).

In yet another embodiment, if the device 100 is not recovered from the malfunction after information in the first RAM 120 is restored (after the step 560), the whole device 100 may be reset. This makes it possible to recover the device 100 from its malfunction even in the case where the malfunction of the device 100 is not caused by the malfunction of the CPU 115 and it is not due to information in the main memory 120 and the registers 145.

As an example, the determination of whether or not the malfunction occurs may be made in the following manner:
- Preliminarily defining a range of a predetermined stack pointer, and detecting that the stack pointer is not in that range at the time of determination.
- Detecting that the memory space accessed does not exist.
- Undefined instruction is detected.
- Abnormality is detected by an abnormality detecting function incorporated in the CPU 115 (e.g., in the case where denominator is 0 when performing a division calculation).
Various other conventionally known techniques may be used.

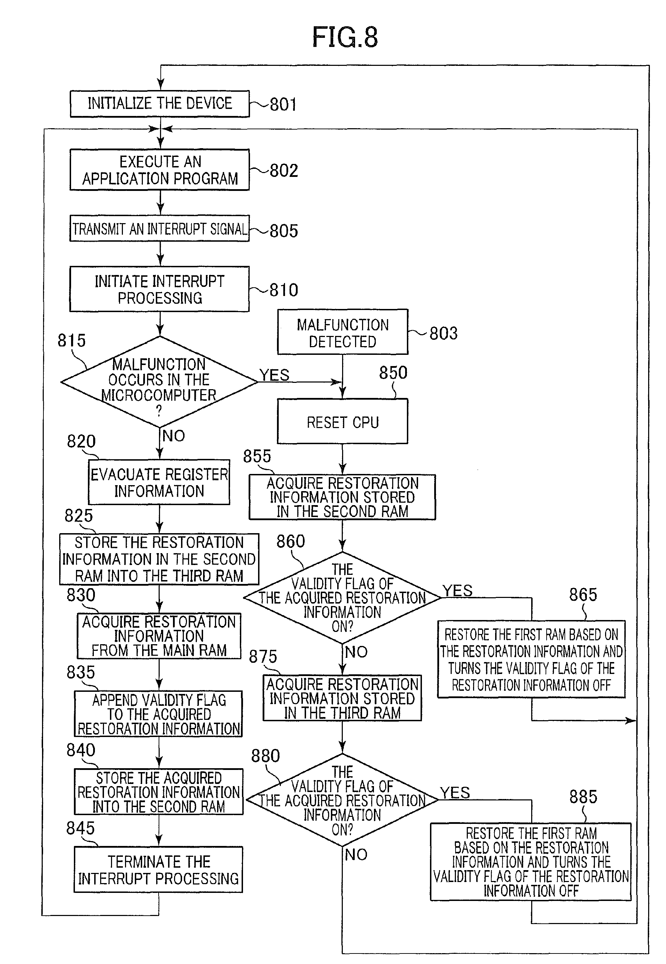

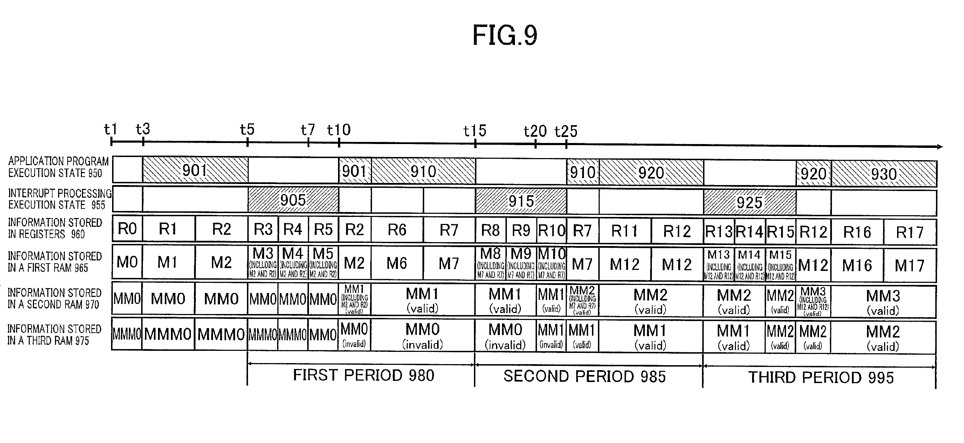

A fourth embodiment of the present invention will be described with reference to FIGS. 8 and 9. In this embodiment, the device 100 comprises three RAMs. FIG. 8 illustrates a process flow of an operation of an embodiment in which acquisition and storage of restoration information are periodically performed. In this embodiment, information in the registers 145 is stored in a RAM by performing explicit processing. FIG. 9 is a time chart illustrating a relationship between each process in steps 805 to 840 shown in the process flow of FIG. 8 and information stored in a storage unit.

In FIG. 9, arrows along a horizontal axis represent passages of time, and hatched portions in rows of application program execution state 950 and interrupt processing execution state 955 represent states where each processing is being performed. Then, in information stored in registers 960, information stored in a first RAM 965, information stored in a second RAM 970, and information stored in a third RAM 975, R0, R1 ..., M0, M1 ..., MM0, MM1..., and MMMO, MMM1..., etc. represent information being stored. In addition, in R0, R1 ..., M0, M1 ..., MM0, MM1..., and MMMO, MMM1..., etc., like symbols represent like information stored. It is noted that while the register and storage unit information concurrently vary in FIG. 9, the implementation may be made such that this information does not vary concurrently, as is apparent to those having ordinary skill in the art. FIG. 9 is shown for illustrative purpose, and the temporal scale is not necessarily correct. Therefore, execution time of the interrupt processing may be of very small percentage relative to execution time of the application program.

First, the device 100 itself is powered on and initialization of the whole device 100 is performed (step 801). As shown at t1 of FIG. 9, initialization is performed. R0, M0, MM0 and MMMO respectively indicate that the information in the registers 145, main memory 120, second RAM 125 and third RAM 130 is the initialized information. Then, after the completion of initialization, execution of the application program begins as indicated by a state 901 at t3 of FIG. 9 (step 802). As the application program progresses, the register information varies from R0 to R1, and then from R1 to R2. Further, the storage unit information also varies from M0 to M1, and then from M1 to M2.

At t5 through t10 of FIG. 9, a series of interrupt processing steps 805 to 845 is performed. At t5 of FIG. 9, the auxiliary circuit 105 transmits an interrupt signal to the CPU 115 (step 805). The interrupt signal is generated at a constant period (e.g., 980, 985 and 995 in FIG. 9) according to a timer in the auxiliary circuit 105 and transmitted to the CPU 115. Upon receiving the interrupt signal, the CPU 115 begins the interrupt processing (step 810). As shown in the states 901 and 905 at t5 of FIG. 9, the application program is halted and the interrupt processing begins.

After the interrupt processing begins, first, a determination of if any malfunction has occurred in the device 100 is made(step 815). If a malfunction has not occurred, the process flow proceeds to step 820. Otherwise, the process flow proceeds to step 850.

If it is determined that no malfunctions have occurred in the device 100 (step 815), the CPU 115 evacuates the register information into the main memory 120, wherein the register information is information stored in the registers 145 which is necessary to execute the application program (step 820). To resume the application program after termination of the interrupt processing, as shown by the time point of t5 of FIG. 9, the main memory 120 stores storage unit information M3 including the evacuated register information R2. This operation is a normal interrupt processing operation. In this case, the interrupt processing does not change the information in the main memory 120 used in the application program. Therefore, the storage unit information M3 may include storage unit information M2 and register information R2 immediately before the initiation of the interrupt processing.

Then, the storage unit management section stores the information stored in the second RAM 125 into the third RAM 130 (step 825). Thus, at t7 of FIG. 9, the information stored in the third RAM 130 is changed from MMMO to MM0.

Then, the storage unit management section acquires information (restoration information) stored in the first RAM 120 as the main memory (step 830), and appends information indicating that the restoration information is valid to the restoration information in order to indicate that the acquired restoration information can be used to restore the information in the main memory 120 (step 835). In particular, 1 bit or more of information is appended to the restoration information, and this information can be used as a validity flag indicative of whether or not the information can be used to restore the information in the main memory 120. The step of setting the restoration information to valid is only performed in this step. Accordingly, the MM0 indicative of initialized information in the second RAM 125 and the MMMO indicative of initialized information in the third RAM 130 are not the information stored through this step, so the validity flag of MM0 and MMMO is off. Therefore, the information MM0 and MMMO is invalid restoration information.

Further, the storage unit management section stores the acquired restoration information into the second RAM 125 (step 840). Thus, at t10 of FIG. 9, the restoration information stored in the second RAM 125 is changed from MM0 to MM1. At this moment, the restoration information is information MM1 immediately after t10 of FIG. 9 stored in the second RAM 125, and the restoration information MM1 is register information R2 and storage unit information M2 at t5 of FIG. 9 immediately before the interrupt processing is performed.

Then, the CPU 115 terminates the interrupt processing (step 840). Thereafter, the process flow returns to step 805.

Steps 825 to 840, which are performed again after returning to step 805, will be described. After the determination that no malfunction has occurred in the device 100 (step 815), the storage unit management section stores information stored in the second RAM 125 into the third RAM 130 (step 825). At t20 of FIG. 9, the information stored in the third RAM 130 is changed from MM0 to MM1.

Then, the storage unit management section acquires information (restoration information) stored in the first RAM 120 as the main memory (step 830), appends information indicating that the restoration information is valid to the restoration information (step 835), and stores it into the second RAM 125 (step 840). Thus, at t25 of FIG. 9, the information stored in the second RAM 125 is changed from MM1 to MM2.

Then, the interrupt processing is terminated (step 845) and the process flow returns to step 805. Thereafter, a series of steps 805 to 840 is repeated in the same manner.

On the other hand, if it is determined that the malfunction occurs in the device 100 (step 815), the auxiliary circuit 105 resets only the CPU 115 (step 850). After that, the storage unit management section acquires the restoration information stored in the second RAM 125 (step 855). Further, the storage unit management section determines if the restoration information acquired from the second RAM 125 can be used to restore the information in the main memory 120 (step 860).

In step 860, if it is determined that the validity flag of the restoration information acquired from the second RAM 125 is on, the storage unit management section restores information in the first RAM 120 and the corresponding registers 145 based on the acquired restoration information, and turns the validity flag of the restoration information stored in the second RAM 125 off (step 865). Then, the process flow proceeds to step 805.

In step 860, if it is determined that the validity flag of the restoration information acquired from the second RAM 125 is off, the storage unit management section acquires the restoration information stored in the third RAM 130 (step 875). Then, the storage unit management section determines if the restoration information acquired from the third RAM 130 can be used to restore the information in the main memory 120 (step 880).

In step 880, if it is determined that the validity flag of the restoration information acquired from the third RAM 130 is on, the storage unit management section restores information in the first RAM 120 and the corresponding registers 145 based on the acquired restoration information, and turns the validity flag of the restoration information stored in the third RAM 130 off (step 885).

In step 880, the validity flag acquired from the third RAM 130 is off, the process flow proceeds to step 801, where the whole device 100 is initialized (step 801).

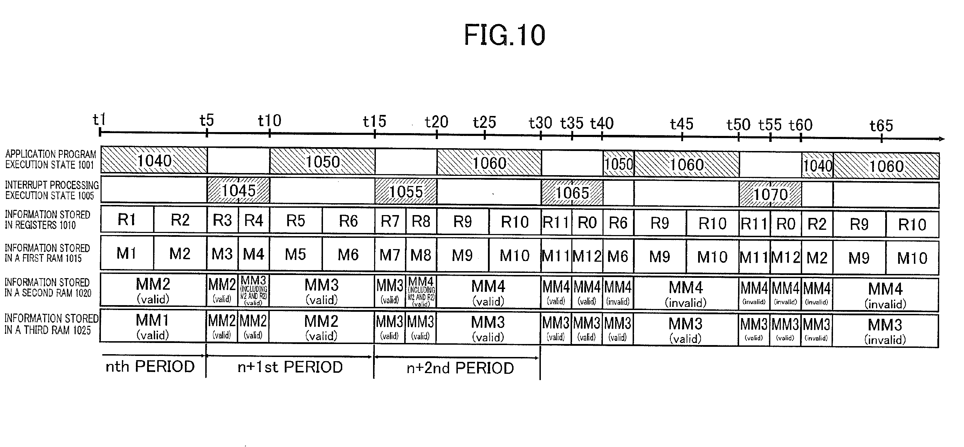

FIG. 10 is a time chart illustrating a use case of the fourth embodiment of the device 100. Initially, at t1, the information stored in the second RAM 125 is information MM2 which can be used for restoration of the main memory (with its validity flag on), and the information stored in the third RAM 130 is MM1 with its validity flag on.

At t5 through t10, steps 805 to 845 in FIG. 8 are performed. Through these steps, the information stored in the second RAM 125 is changed from the MM2 to MM3 with its validity flag on, and the information stored in the third RAM 130 is changed from the MM1 to MM2 with its validity flag on. Further, t15 through t20, steps 805 to 845 in FIG. 8 are performed again. Through these steps, the information stored in the second RAM 125 becomes MM4 with its validity flag on, and the information stored in the third RAM 130 becomes MM3 with its validity flag on.

Here, assume that the device 100 malfunctions at t25. After that, at t30, the interrupt processing is initiated (step 810 of FIG. 8), and the malfunction is detected (step 815 of FIG. 8). Then, at t35, only the CPU 100 is reset (step 850) and the register information is initialized (the register information becomes R0).

At t40, the validity flag of information MM4 stored in the second RAM 125 is on, and thus information in the main memory 120 is restored using the information MM4, and the validity flag of the information MM4 stored in the second RAM 125 is turned off (steps 855 to 865 in FIG. 8). Accordingly, the register information is changed from R0 to R6 and the storage unit information is changed from M12 to M6. Thus, at t40, the operation of the application program is restored to a state 1050 immediately before t15.

Here, assume that the device 100 malfunctions again at t45. It is more likely that the malfunction in this case is caused by information stored in the main memory 120 (e.g., register information R6 and main storage information M6, or register information R9 and main storage information M9) than by the CPU 115.

After that, at t50, the interrupt processing is initiated (step 810 of FIG. 8), and the malfunction is detected (step 815 of FIG. 8). Then, at t55, only the CPU 100 is reset (step 850) and the register information is initialized (the register information becomes R0).

At t60, the validity flag of information MM4 stored in the second RAM 125 is off, and thus restoration of information in the main memory 120 using the information MM4 is not performed (steps 855 to 860 of FIG. 8). In this case, the a validity flag of information MM3 stored in the third RAM 130 is on, and thus information in the main memory 120 is restored using the information MM3, and the validity flag of the information MM3 stored in the third RAM 130 is turned off (steps 875 to 885 in FIG. 8). Accordingly, the register information is changed from R0 to R2 and the storage unit information is changed from M12 to M2. Thus, at t60, the operation of the application program is restored to a state 1040 immediately before t5.

As can be seen from this example, two RAMs other than the main memory 120 provided in the device 100 make it possible to restore information in the main memory 120 using restoration information two generations earlier in the event of malfunction in the device 100. This further improves the reliability of the device 100.

Further, in the event of further malfunction of the device 100 at t65, the process flow proceeds from step 815 to step 850 in FIG. 8. At this moment, both of the validity flags of information MM4 stored in the second RAM 125 and the information MM3 stored in the third RAM 130 are off, and thus the main memory 120 is not restored using the restoration information stored in the second or third RAM 125 or 130 (the process flow of FIG. 8 proceeds to the "No" arrows in either steps 860 and 880). Accordingly, the whole device 100 is initialized (step 801 in FIG. 8). In the event of initialization of the whole device 100, the application program is re-executed from the start.

Additionally, the malfunction detecting section such as the CPU 115 detects the occurrence of malfunction in the device 100 independently of the execution process and the interrupt processing of the application program (step 803). If the malfunction detecting section detects the occurrence of malfunction in the device 100, the process flow proceeds to step 850. Thus, the malfunction in the device 100, such as executing undefined instructions or accessing nonexistent memory space, is resolved.

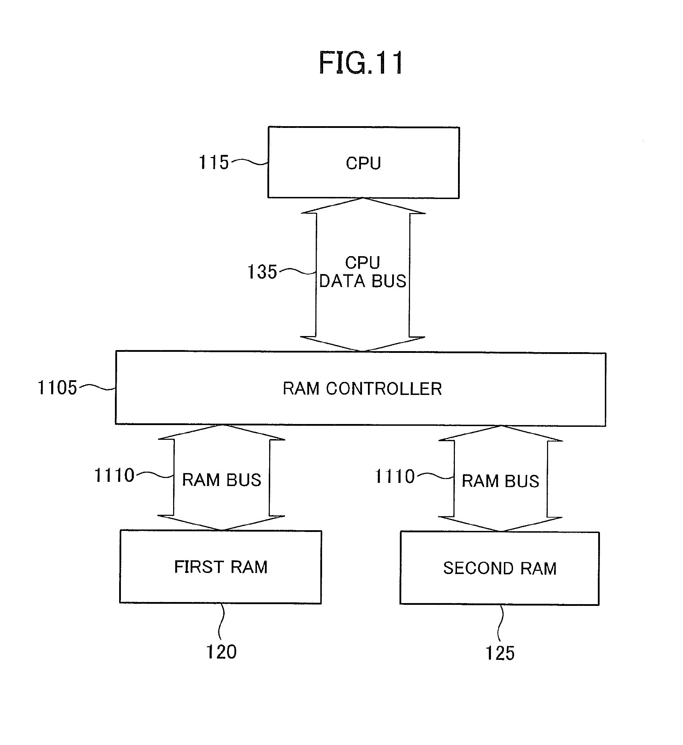

FIG. 11 illustrates in a block diagram the relationship between a CPU and RAMs for implementing the present embodiment. A storage unit controller 1105 is connected to the central processing unit 115 via the CPU data bus 135, and to the first RAM 120 and the second rewritable storage unit 125 via a storage unit bus 1110.

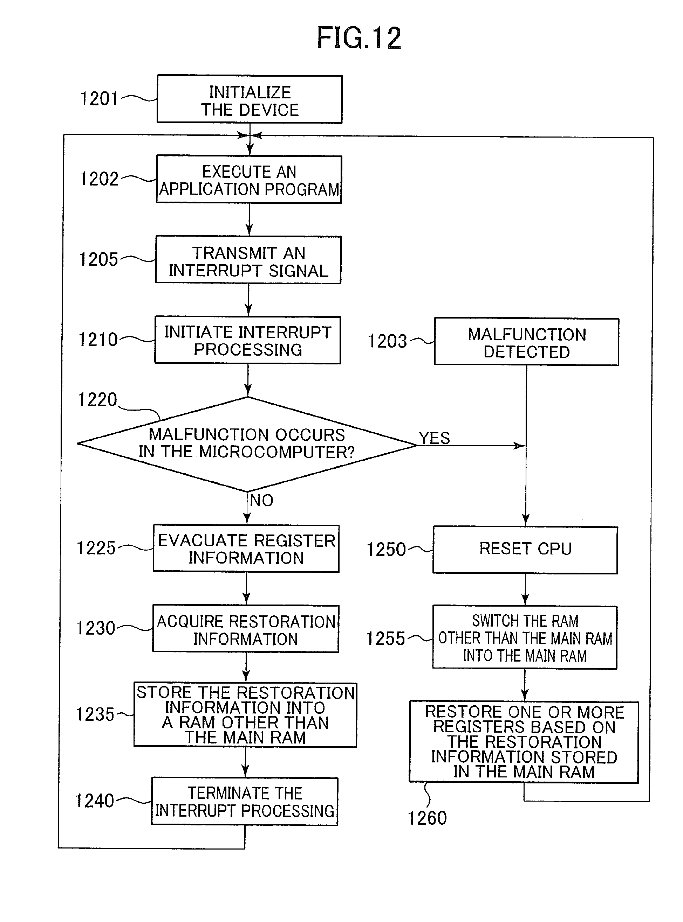

FIG. 12 is a process flow illustrating the operation of an embodiment using the storage unit controller 1105 of FIG. 11. Further, FIG. 12 shows a partially modified embodiment from the embodiment shown in FIG. 5. In steps 550 to 560 of FIG. 5, the main memory 120 is restored by storing restoration information stored in the second RAM 125 into the first RAM 120. The present embodiment is achieved by modifying these steps 555 and 560, which are the steps for restoration.

In FIG. 12, steps 1201 to 1230, 1240 and 1250 are the same as steps 501 to 530, 540 and 550 in FIG. 5, respectively. Therefore, only steps 1235 and 1255, which are specific to this embodiment, and their associated steps will be described.

The storage unit management section acquires information (restoration information) stored in the main memory (step 1230). The storage unit management section stores the restoration information into a RAM other than the main memory (step 1235).

Thereafter, the process flow proceeds to step 1150 in accordance with occurrence of a malfunction in the microcomputer. The CPU 115 is reset (step 1150). Then, the storage unit controller 1105 switches a storage unit other than the main memory to the main memory (step 1255). In this flow, assuming that the main memory is the first RAM 120, then in this step, the main memory is switched from the first RAM 120 to the second RAM 125. Further, the storage unit management section restores the information in the corresponding registers 145 based on the restoration information stored in the second RAM 125 as the main memory (step 1260).

In addition, the malfunction detecting section such as the CPU 115 detects the occurrence of malfunction in the device 100 independently of the execution process and the interrupt processing of the application program (step 1203). If the malfunction detecting section detects the occurrence of malfunction in the device 100, the process flow proceeds to step 1250. Thus, the malfunction in the device 100, such as executing undefined instructions or accessing nonexistent memory space, is resolved.

Also in this embodiment, a step of periodically resetting only the CPU 115 may be added. Additionally, the device 100 may comprise three or more RAMs in which case the validity flag described above may be used.

The present embodiment accomplishes the restoration of main memory by the storage unit controller switching the main memory rather than data movement. Accordingly, if there is enormous amount of restoration information, use of this embodiment makes it possible to reduce processing time for data transfer. Specifically, the processing time for restoration taken by this embodiment is shorter than that of other embodiments in which data movement is made.

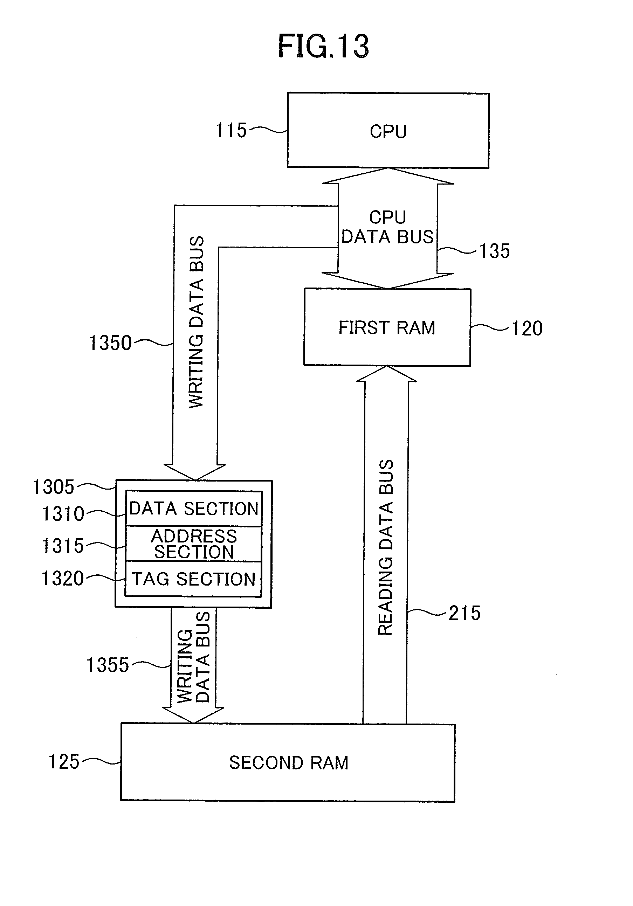

FIG. 13 is a block diagram illustrating an embodiment in which a cache memory is used between the first RAM 120 as a main memory and the second RAM 125 other than the main memory. In FIG. 13, a cache memory 1305 is connected to the CPU data bus 135 via a writing data bus 1350, and to the second RAM 125 via a writing data bus 1355.

In the event that the CPU 115 modifies the information stored in the first RAM 120 as the main memory, the storage unit management section modifies the information stored in the cache memory 1305 in a similar manner using techniques such as a write-back approach or a write-through approach. After that, in storing the restoration information into the second RAM 125, the storage unit management section stores only the information modified in the cache memory 1305 into the second RAM 125 without using the information stored in the main memory 120.

The cache memory 1301 comprises an address section 1315, a data section 1310, and a tag section 1320. The cache memory 1301 can store all of the information stored in the main memory 120. In addition, the cache memory 1301 can also store only the information modified in the main memory 120.

When a writing operation is performed to the main memory 120, the storage unit management section stores the address to which the writing operation is performed into the address section 1315, and stores data, which is the written content, into the data section 1310. Further, the storage unit management section modifies a tag which is the information for managing the address of information stored in the main memory 120, and appends information indicating that the corresponding address has been modified to the tag.

If there is a modification in information of the same address, the data section overwrites the information with the modified one. Thus, the data section does not have any modification history of the modified information, but has the latest information.

In the event that the cache memory 1305 stores all of the information in the main memory 120, the tag has information indicating that the information of the corresponding tag has been modified. In the event that the cache memory 1305 stores only the information modified in the main memory 120, when a tag of a certain address exists, the address indicates that there has been a modification.

The information used as restoration information stored in the cache memory 1305 includes information modified or information indicating that there has been a modification in the main memory 120, and thus the storage unit information to be stored in the second RAM is limited to the information modified in the main memory 120 by using the cache memory 1305. Accordingly, the volume of data transferred from the main memory 120 to the second RAM 125 is reduced, which significantly reduces the data transfer time.

Since the information stored in the cache memory 1305 includes information indicating a difference between information stored in the main memory 120 and the second RAM 125 during a predetermined time period, the information stored in the first and second RAMs 120 and 125 and the cache memory 1305 is required to be synchronized at a starting time point of the predetermined time period. Specifically, after initialization of the device 100, or after restoration of the main memory 120, etc., the storage unit management section is required to update the information stored in the second RAM 125 using the information stored in the main memory 120, and is required to clear the information in the tag section 1320 or all the information in the cache memory 1305.

In the above embodiments, a device 100 comprising two or three RAMs has been described. However, the device 100 may comprise more RAMs (in contrast, the three RAMs may also be replaced with two RAMs). This allows for management of more generations. In addition, the RAMs may be made redundant to improve the reliability of the device 100.

The RAM shown in the above embodiments is an example of "rewritable storage unit" described in the claim. The rewritable storage unit includes all the storage units to which rewriting operation can be made, such as a non-volatile memory. In particular, the rewritable storage unit is a storage unit that can be used as a main storage unit.

The CPU shown in the above embodiments is an example of "central processing unit" described in the claim. The central processing unit includes a circuit or device for controlling functions of a predetermined device, such as CPU, MPU, processor and microprocessor.

## Claims

1. A microcomputer capable of restoring information in a main storage unit, comprising:
a central processing unit comprising one or more registers;
a rewritable first storage unit;
a rewritable second storage unit; and
storage unit management means for acquiring restoration information comprising of storage unit information which is information stored in the first storage unit and register information which is information stored in the one or more registers, and storing the restoration information into the second storage unit.

2. The microcomputer as defined in claim 1, wherein said acquiring restoration information and said storing the restoration information into the second storage unit are repetitively performed.

3. The microcomputer as defined in claim 2, wherein the repetition is performed on a periodic basis.

4. The microcomputer as defined in claim 3, wherein the repetition is performed by periodically performing interrupt processing, and wherein the storage unit management means acquires the restoration information in each interrupt processing, and stores the restoration information into the second storage unit.

5. The microcomputer as defined in claim 2, wherein the repetition is performed at random intervals.

6. The microcomputer as defined in claim 2, wherein the repetition is performed when a predetermined condition is met.

7. The microcomputer as defined in any one of claims 1 to 6, which further comprises:
a cache memory located between the first storage unit or the central processing unit and the second storage unit, wherein when information stored in the first storage unit is modified, the cache memory stores only the modified information, and
wherein the restoration information is acquired on the basis of information stored in the cache memory.

8. The microcomputer as defined in any one of claims 1 to 7, wherein the storage unit management means restores information in the first storage unit using the storage unit information in the restoration information stored in the second storage unit, and restores, using the register information in the restoration information, information in the corresponding one or more registers.

9. The microcomputer as defined in claim 8, wherein the storage unit management means performs said restoring information in the first storage and said restoring information in the one or more registers when the device malfunctions.

10. The microcomputer as defined in claim 9, wherein a central processing unit is reset when the device malfunctions.

11. The microcomputer as defined in any one of claims 7 to 10, which further comprises:
a storage unit controller,
wherein the restoration of the storage unit information is performed by the storage unit controller switching the main storage unit from the first storage unit to the second storage unit.

12. The microcomputer as defined in any one of claims 1 to 11, wherein the storage unit management means is operable, when acquiring the restoration information, to validate and append restoration possibility information to the restoration information, wherein the restoration possibility information is information indicative of validity if the restoration information is available at the time of restoration and indicative of invalidity if the restoration information is not available at the time of restoration, and when restoration of information in the first storage unit and restoration of information in the one or more registers are performed, to restore information in the first storage unit using the storage unit information in the restoration information stored in the second storage unit and restores, using the register information in the restoration information, information in the corresponding one or more registers only in the case where the restoration possibility information indicates valid, wherein the storage unit management means is further operable to change the restoration possibility information in the restoration information stored in the second storage unit to indicate invalid, and wherein the restoration possibility information is not changed unless restoration information is newly acquired.

13. The microcomputer as defined in any one of claims 1 to 12, which further comprises a rewritable third storage unit,
wherein the storage unit management means is operable to store the restoration information stored in the second storage unit into the third storage unit, and to acquire new restoration information and store it into the second storage unit, and
wherein the storage unit management means is further operable to perform restoration of information in the first storage unit and restoration of information in the one or more registers based on the restoration information or the new restoration information.

14. The microcomputer as defined in claim 13, wherein both of the restoration information and the new restoration information include the restoration possibility information, wherein the storage unit management means is operable to perform restoration of information in the first storage unit and restoration of information in the one or more registers based on the restoration information or the new restoration information in which the restoration possibility information indicates valid, wherein the storage unit management means is further operable to change the restoration possibility information in the restoration information or the new restoration information used in the restoration to indicate invalid, and wherein the restoration possibility information is not changed unless restoration information is newly acquired.

15. A microcomputer capable of restoring information in a main storage unit, comprising:
a rewritable first storage unit;
a rewritable second storage unit; and
storage unit management means for storing storage unit information, which is information stored in the first storage unit, into the second storage unit.

16. The microcomputer as defined in claim 15, wherein said storing storage unit information into the second storage unit is repetitively performed.

17. The microcomputer as defined in claim 16, wherein the repetition is performed on a periodic basis.

18. The microcomputer as defined in claim 16, wherein the repetition is performed at random intervals.

19. The microcomputer as defined in claim 16, wherein the repetition is performed when a predetermined condition is met.

20. The microcomputer as defined in any one of claims 15 to 19, wherein the storage unit management means restores information in the first storage unit using the storage unit information stored in the second storage unit.

21. The microcomputer as defined in claim 20, which further comprises:
a central processing unit comprising one or more registers;
wherein the storage unit information includes register information which is information in the one or more registers, and the storage unit management means, when restoring information in the first storage unit, restores, using the register information included in the storage unit information, information in the corresponding one or more registers.
